Europäisches Patentamt

European Patent Office

Office européen des brevets

(11) Veröffentlichungsnummer: **0 416 431 A2**

# (12) EUROPÄISCHE PATENTANMELDUNG

(21) Anmeldenummer: 90116427.7

(22) Anmeldetag: 28.08.90

(51) Int. Cl.5: **G11B 7/24, G11B 7/00**

(30) Priorität: 07.09.89 DE 3929699

(43) Veröffentlichungstag der Anmeldung:
13.03.91 Patentblatt 91/11

(84) Benannte Vertragsstaaten:
**DE FR GB NL**

(71) Anmelder: **BASF Aktiengesellschaft**
**Carl-Bosch-Strasse 38**
**W-6700 Ludwigshafen(DE)**

(72) Erfinder: **Iselborn, Stefan, Dr.**
**Friedrichstrasse 164**
**W-6700 Ludwigshafen(DE)**
Erfinder: **Harth, Klaus, Dr.**
**Starenweg 6**
**W-6719 Altleiningen(DE)**
Erfinder: **Hibst, Hartmut, Dr.**
**Sternstrasse 215**
**W-6700 Ludwigshafen(DE)**

(54) **Aufzeichnungsmedium für reversible optische Aufzeichnung sowie Wiedergabemethode unter Verwendung dieses Aufzeichnungsmediums.**

(57) Die Erfindung betrifft ein Aufzeichnungsmedium für die reversible optische Aufzeichnung, im wesentlichen bestehend aus einem Substrat, mindestens einer Speicherschicht, welche durch Bestrahlung mit Licht zwischen zwei Zuständen unterschiedlicher optischer Konstanten reversibel schaltet, und mindestens einer transparenten Schicht sowie eine Wiedergabemethode zum Nachweis gespeicherter Informationen auf optischen Aufzeichnungsmedien.

EP 0 416 431 A2

EP 0 416 431 A2

## AUFZEICHNUNGSMEDIUM FÜR REVERSIBLE OPTISCHE AUFZEICHNUNG SOWIE WIEDERGABEMETHODE UNTER VERWENDUNG DIESES AUFZEICHNUNGSMEDIUMS

Die Erfindung betrifft ein Aufzeichnungsmedium für reversible optische Aufzeichnung, im wesentlichen bestehend aus einem Substrat, mindestens einer Speicherschicht, welche durch Bestrahlung mit Licht zwischen zwei Zuständen unterschiedlicher optischer Konstanten reversibel schaltet, und mindestens einer transparenten Schicht sowie eine Wiedergabemethode unter Verwendung dieses Aufzeichnungsmediums.

Es ist bekannt, daß bestimmte Materialien, die bei Raumtemperatur in zwei unterschiedlichen Strukturmodifikationen, z.B. in einer ungeordneten/amorphen und einer geordneten/kristallinen Phase, existieren durch Erwärmen über eine feste Temperatur, der Kristallisationstemperatur bzw. der Schmelztemperatur, und anschließendes Abkühlen mit kontrollierter Abkühlrate von einer Modifikation in die jeweils andere überführt werden können. Weiterhin ist bekannt, daß diese Materialien in der reversiblen optischen Speichertechnik benutzt werden können (u.a. EP-A 186 227).

Dazu werden die hierfür geeigneten Materialien in der Regel in der Form dünner Schichten auf ein transparentes Substrat aufgebracht und mittels eines Objektives hoher numerischer Apertur durch das Substrat im wesentlichen senkrecht mit einem fokussierten Lichtstrahl lokal beleuchtet. Der Phasenwechsel amorph/kristallin oder kristallin/amorph wird durch Lichtpulse abgestimmter Dauer und Intensität erzeugt. Die Phasenänderung bewirkt eine Änderung des Reflexions- oder Transmissionsvermögens an den beleuchteten Orten und ist durch weniger intensives Licht "auslesbar".

Angaben über die vorwiegend eingesetzten Materialien sowie zu den Anforderungen an die Lichtpulsintensitäten und deren Dauer finden sich u.a. in "Proc. Int. Symp. on Optical Memory", Jap. J. Appl. Phys., Vol. 26 (1987), Suppl. 26-4, Seiten 47 bis 76.

Nachteilig sind bei den so charakterisierten optischen Aufzeichnungsmedien die durch die Änderung der Struktur des Speichermaterials bedingten geringen Änderungen des Reflexions- oder Absorptionsvermögens. Die Größe des erzielbaren gespeicherten Signals läßt sich durch den Kontrast K nach der Formel

$$K = |[R_c - R_a][R_c + R_a]|$$

angeben, wobei $R_a$ das Reflexionsvermögen des Speichermediums im amorphen und $R_c$ das Reflexionsvermögen im kristallinen Zustand wiedergibt. Beispielhaft seien Te-Ge-Legierungsschichten gemäß EP-A 260 921 genannt, welche einen maximalen Kontrast von etwa 20% aufweisen.

In der DE-A 31 18 058 werden reversible optische Aufzeichnungsträger beschrieben, die neben der eigentlichen Datenspeicherschicht und dem Substrat eine oder mehrere weitere Schichten enthalten, die so in ihrer Dicke und Reihenfolge abgestimmt werden, daß das Datenträgermedium im unbeschriebenen Falle ein möglichst geringes Reflexionsvermögen aufweist, wobei der Kontrast verbessert wird. Nachteilig ist dabei, daß das Reflexionsvermögen so gering wird, daß das am Detektor ankommende Licht nicht ausreicht, um die notwendigen Servofunktionen zur Steuerung der optischen Schreib-/Leseköpfe zu gewährleisten.

Üblicherweise werden bei optischen Aufzeichnungsträgern die Substrate aus lichtdurchlässigen Materialien gefertigt, wie z.B. Glas, PMMA oder Polycarbonat, und mit kreis- oder zylinderförmigen Rillen versehen, welche zur Spurlagenerkennung und zur Adressierung der Daten dienen. So beschreibt die EP-A 102 799 eine optische Platte mit V-förmigen Rillen mit einem Paar schräggestellter Seitenflächen, bei dem die Information durch Fokussieren eines Laserstrahls auf einen Punkt der Schräge der Seitenfläche aufgezeichnet wird. Diese Art der optischen Datenaufzeichnung führt zu einer Erhöhung der Aufzeichnungsdichte der Datenträger gegenüber der üblichen Ausführung optischer Datenplatten, bei der auf hoch- oder tiefliegende Plattenoberflächen (sogenannte "lands" oder "grooves") aufgezeichnet wird. Auch ist bekannt (EP-A 55 439), daß durch eine V-förmige oder umgekehrt trapezförmige Rillenform mit einer Tiefe der Spurrillen von einem Viertel der Wellenlänge des Laserlichts der sogenannte "crosstalk" beim Lesen von auf den Seitenflächen der Spurrillen aufgezeichneten Informationen vermieden wird.

Aufgabe der vorliegenden Erfindung war es nun, ein neues Aufzeichnungsmedium für die reversible optische Aufzeichnung sowie eine Wiedergabemethode bereitzustellen, wobei das Aufzeichnungsmedium einen gegenüber den bekannten Speichermedien höheren Kontrast und im nichtbeschriebenen Zustand ein hohes Reflexionsvermögen aufweist. Außerdem soll sich das Aufzeichnungsmedium durch eine gute Korrosionsstabilität auszeichnen.

Es wurde nun gefunden, daß sich die Aufgabe mit einem Aufzeichnungsmedium für die reversible optische Aufzeichnung und deren Wiedergabe, im wesentlichen bestehend aus einem Substrat, mindestens einer Speicherschicht, welche durch Bestrahlung mit Licht zwischen zwei Zuständen unterschied licher optischer Konstanten reversibel schaltet, und mindestens einer transparenten Schicht lösen läßt, wenn bei der Bestrahlung der Speicherschicht unter einem von 0 Grad verschiedenen Einfallswinkel bei einer

2

Schichtdicke d der transparenten Schicht für die Wellenlänge des eingestrahlten Lichts der Reflexionskontrast für senkrecht zur Einfallsebene polarisiertes Licht größer als 0,5 ist und die Summe der Reflexionsvermögen für parallel und senkrecht polarisiertes Licht mindestens 8 % beträgt.

Außerdem ist Gegenstand der Erfindung eine Wiedergabemethode für optische Aufzeichnungsmedien, bei welcher Informationen mit Hilfe eines Lichtstrahls, welcher auf die Speicherschicht des Aufzeichnungsmediums fokusiert wird, nachgewiesen worden, wenn die Speicherschicht mit einem Lichtstrahl einer Wellenlänge von 400-900 nm unter einem Winkel von 40 bis 80° zur Normalen auf die Speicherschicht beleuchtet wird und die reflektierte, senkrecht polarisierte Komponente des Lichtstrahls identifiziert wird.

In einer vorteilhaften Ausgestaltung des erfindungsgemäßen Aufzeichnungsmediums wird die durch die Bestrahlung mit Licht bewirkte Veränderung der optischen Konstanten der Speicherschicht durch einen Phasenwechsel der die Schicht bildenden Substanz hervorgerufen. Hierzu eignen sich Metall- oder Halbleiterschichten, die mindestens eines der Elemente Te, Se, S, C, Si, Ge, In, Ga, Sb, Bi, As, Au, Ag oder Cu enthalten. Besonders zweckmäßig sind hierbei feste chemische Verbindungen, die mindestens eines der Elemente Te, Se, Ge, In, Ga, Sb oder As enthalten und in bevorzugter Weise aus $GeTe$, $GeSb_2Te_4$ oder $Sb_2Se$ bestehen. Solche Schichten lassen sich in bekannter Weise auf die für optische Aufzeichnungsträger üblichen Substrate meist durch Sputtern, Aufdampfen oder andere physikalische Abscheideverfahren oder auch CVD aufbringen. Verfahren zur Herstellung dieser sogenannten Phasenwechselschichten sind beschrieben.

Auf der an sich bekannten Speicherschicht befindet sich beim erfindungsgemäßen Aufzeichnungsmedium die transparente Schicht. Sie weist eine nitridische, oxidische oder carbidische Struktur auf. Bevorzugt sind solche Schichten, welche einen Brechungsindex von kleiner 2,5 zeigen, von denen vorteilhafterweise solche aus AlN oder $SiO_2$ herangezogen werden.

Die Schichtdicke d dieser transparenten Schicht ist ein wesentlicher Parameter für den Aufbau des erfindungsgemäßen Aufzeichnungsmediums. Sie bemißt sich dadurch, daß bei der Wellenlänge des eingestrahlten Lichts der Reflexionskontrast für das senkrecht zur Einfallsebene polarisierte Licht größer als 0,5 wird. Das bedeutet, daß die senkrecht zur Einfallsebene polarisierte Komponente in einem der beiden Schaltzustände nur noch sehr schwach bzw. überhaupt nicht mehr reflektiert wird. Gleichzeitig wird die parallel polarisierte Komponente noch stark reflektiert, so daß nur die parallel polarisierte Komponente oder die Summe aus parallel und senkrecht polarisierter Komponenten benutzt werden kann, um die in der optischen Speichertechnik üblichen Servofunktionen für Fokus- und Spurlagenregelung aufrecht zu erhalten. Während die Wellenlänge des eingestrahlten Lichts im allgemeinen zwischen 400 bis 900 nm beträgt, wird die Schichtdicke d der transparenten Schicht zwischen 50 und 200 nm eingestellt.

Die Substrate für die erfindungsgemäßen Aufzeichnungsmedien sind bekannt und bestehen, wie bei den üblichen optischen Aufzeichnungsträgern meist aus Glas, Polycarbonat oder PMMA in Scheibenform. Sie können eine Oberflächenstruktur aus kreis- oder sprialförmigen Spurrillen aufweisen. Es ist auch bekannt, daß diese Spurrillen, bezogen auf den Querschnitt des Substrats, schräg angeordnet sein können. Für den Fall, daß die Spurrillen auf dem Substrat mit einer Neigung zur Substratnormale ausgeführt sind und auf dieser schrägliegenden Fläche die Aufzeichnung erfolgt, so geschieht die Beleuchtung bei senkrecht über dem Substrat stehenden Objektiv unter dem gleichen Neigungswinkel. Damit ließe sich beispielsweise die Bestrahlung des Aufzeichnungsmediums mit dem erfindungsgemäß geforderten von 0 Grad verschiedenen Einfallswinkel in besonders einfacher Weise durchführen.

Beispielhaft und ohne den Erfindungsgegenstand zu begrenzen sei anhand eines Aufzeichnungsmediums, das als Speicherschicht eine $Te_{70}Ge_{30}$-Schicht und als transparente Schicht eine solche aus $SiO_2$ aufweist, die Erfindung erläutert.

Auf Glassubstrate wurden zunächst eine Te-Ge-Schicht und anschließend eine $SiO_2$-Schicht der Dicke d aufgesputtert. Die Struktur der Te-Ge-Schichten war amorph. Diese Speichermedien wurden unter einem Einfallswinkel von 70 Grad von der $SiO_2$-Seite beleuchtet und das Verhältnis der Reflexionskoeffizienten für die parallele und die senkrechte Polarisationskomponente des Lichtes bestimmt.

Anschließend wurden die gleichen Medien im Vakuum bei einer Temperatur von 250°C 10 min. lang getempert. Durch diese Wärmebehandlung wurden die Te-Ge-Schichten kristallin. Die Medien mit kristallinen Te-Ge-Schichten wurden ebenfalls unter einem Einfallswinkel von 70 Grad beleuchtet und das Verhältnis der Reflexionskoeffizienten für die parallele und die senkrechte Polarisationskomponente bestimmt.

Die Ergebnisse werden in Tabelle 1 zusammengefaßt:

EP 0 416 431 A2

Tabelle 1

| Wellenlänge (nm) | $r_s/r_p$ | Struktur | d(nm) |
|---|---|---|---|
| 448 | 0,17 | amorph | 100 |
| 448 | 0,02 | krist. | 100 |
| 463 | 0,04 | amorph | 100 |
| 463 | 0,18 | krist. | 100 |
| 583 | 0,19 | amorph | 130 |
| 583 | 0,01 | krist. | 130 |
| 616 | 0,03 | amorph | 130 |
| 616 | 0,19 | krist. | 130 |
| 609 | 0 | amorph | 150 |
| 609 | 0.28 | krist. | 150 |
| 665 | 0.26 | amorph | 150 |
| 665 | 0.01 | krist. | 150 |
| 817 | 0.02 | amorph | 200 |
| 817 | 0.30 | krist. | 200 |

Für $r_s/r_p = 0$, folgt $r_s = 0$. Deshalb kann für die in Tabelle 1 angegebenen Beispiele der Kontrast
$$K = |[r_{c,s}^2 - r_{a,s}^2] / [r_{c,s}^2 + r_{a,s}^2]|$$
für die senkrechte Komponente berechnet werden, wobei die Indizes s und p für die senkrechten und parallelen Komponenten stehen, die Indizes a und c die beiden Strukturmodifikationen amorph und kristallin bedeuten sollen. Um nachzuweisen, daß das Reflexionsvermögen der parallelen Komponente $R_{c,p}$ bzw. $R_{a,p}$ bei gleichzeitig hohem Kontrast der senkrechten Komponenten über 12 % bleibt, wurde es ebenfalls direkt gemessen.

Diese Daten sind in Tabelle 2 dargestellt:

Tabelle 2

| Wellenlänge (nm) | d(nm) | Kontrast | $R_{a,p}$ | $R_{c,p}$ |
|---|---|---|---|---|
| 448 | 100 | 0,983 | 0,162 | 0,154 |
| 463 | 100 | 0,910 | 0,149 | 0,170 |
| 583 | 130 | 0,997 | 0,152 | 0,150 |
| 616 | 130 | 0,988 | 0,151 | 0,147 |
| 609 | 150 | 1,000 | 0,151 | 0,141 |
| 665 | 150 | 0,998 | 0,150 | 0,143 |
| 817 | 200 | 0,999 | 0,161 | 0,188 |

Zur Darstellung des Speicherprinzips mit dem erfindungsgemäßen Aufzeichnungsmedium sei die Ellipsometrie herangezogen. Beim Auslesen der aufgezeichneten Information wird jedoch nur die Senkrechtkomponente herangezogen.

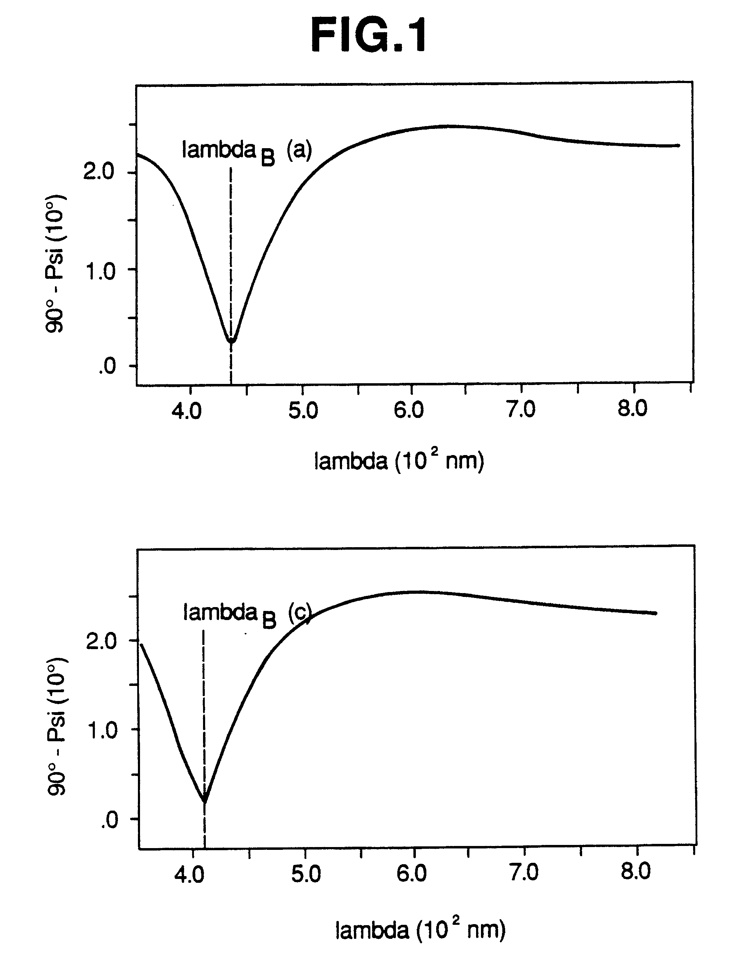

Bei den spektralen Ellipsometriemessungen wurde ein Einfallswinkel von $70°$ für das eingestrahlte Licht mit Wellenlängen von 350 bis 900 nm gewählt. Die Figuren 1(a) bis 1(c) zeigen den spektralen Verlauf der Größe $90°$ - Psi für verschiedene Dicken der $SiO_2$-Schicht auf amorphen und kristallinen $Te_{70}Ge_{30}$-Schichten der Dicke 75 nm. Die Größe tan Psi kennzeichnet das Verhältnis $r_p/r_s$ der Reflexionskoeffizienten für parallel bzw. senkrecht zur Einfallsebene polarisiertes Licht. Erreicht Psi den Wert $90°$ (d.h. $90°$ - Psi = 0), so divergiert das Verhältnis $r_p/r_s$. Da stets $r_p < 1$ gilt, muß für diesen Fall $r_s$ sehr klein werden. Wie die Figuren 1 bis 3 zeigen, erreicht Psi für die untersuchten Schichtsysteme bei einer bestimmten Wellenlänge $lambda_B$, d.h. bei $lambda_B$ (a) für den amorphen und bei $lambda_B$ (c) für den kristallinen Zustand der Speicherschicht, nahezu den Wert $90°$, womit eine starke Unterdrückung der Senkrechtkomponente $r_s$ stattfindet. Lambda$_B$ verschiebt sich mit zunehmender $SiO_2$-Schichtdicke d zu größeren Wellenlängen. In

4

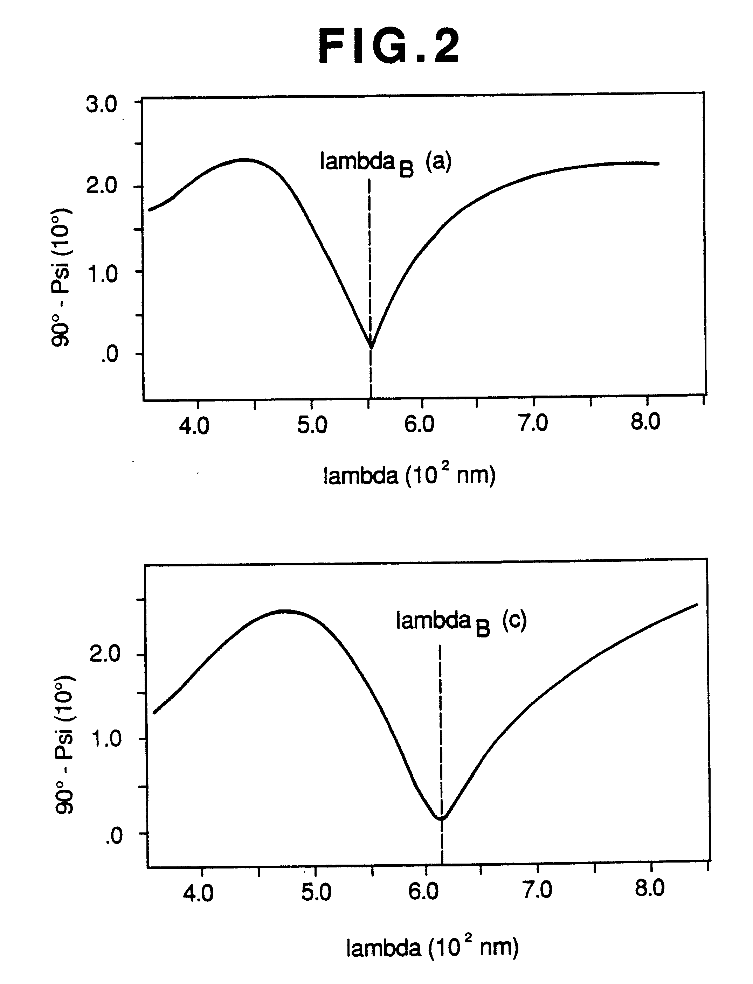

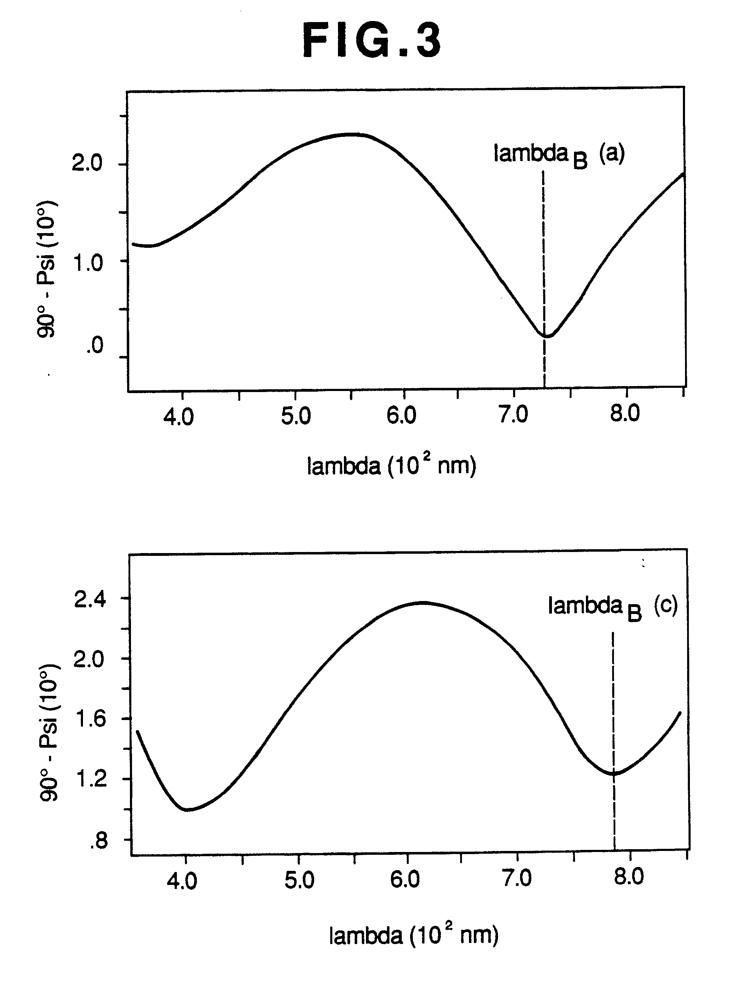

Figur 1 ist d = 100 nm, in Figur 2 ist d = 150 nm und in Figur 3 ist d = 200 nm. Die Lage von $lambda_B$ ist vom Modifikationszustand kristallin bzw. amorph abhängig. Ein reversibel zwischen der amorphen und der kristallinen Phase umschaltbares Medium besitzt somit bei den beiden Wellenlängen $lambda_B$ (a) und $lambda_B$ (c) einen sehr hohen Kontrast

$$K_s = | [R_s (c) - R_s (a)]/[R_s (c) + R_s (a)] |$$

für die Senkrechtkomponente $R_S$ des Reflexionsvermögens.

Modellrechnungen auf der Basis eines Einschichtenmodells (Te-Ge)/$SiO_2$ zeigen, daß das beschriebene Polarisationsverhalten durch Interferenzen derjenigen Strahlen bewirkt wird, die an der Vorder- und Rückseite der $SiO_2$-Schicht reflektiert werden. Die Rechnungen zeigen, daß für geeignete optische Konstanten der (Te-Ge)-Schicht beliebige Werte $lambda_B$ im sichtbaren Spektralbereich durch Variation der Dicke der $SiO_2$-Schicht eingestellt werden können. Der Grad der Auslöschung der Senkrechtkomponente hängt vom Einfallswinkel phi ab. Eine besonders starke Auslöschung tritt auf für Einfallswinkel phi > 40°. Mit kleiner werdendem Einfallswinkel strebt die Größe tan Psi gegen 1. Der maximal erzielbare Kontrast nimmt daher stark ab. Mit der Wahl eines von 0° verschiedenen Einfallswinkels können nun die Senkrecht- und Parallelkomponente des Reflexionsvermögens unterschieden werden, die, abhängig von den optischen Konstanten, unterschiedliche phi-Abhängigkeiten zeigen. Polarisationseffekte treten auch bei der Reflexion an einer einzigen Grenzfläche auf. Bekannt ist z.B. die Auslöschung der Parallelkomponente an der Grenzfläche Luft/Glas bei einem Winkel von etwa 56° (Brewster-Winkel). Die Verwendung eines Schichtsystems bietet nun zusätzlich die Freiheit, bei feststehenden optischen Konstanten und festem Einfallswinkel die Dicke der Deckschicht zur Minimierung des Reflexionsvermögens anzupassen. Im Gegensatz zu einem senkrechten Einfall (phi = 0°) kann dabei eine starke Reduzierung einer der beiden Reflexionskomponenten für einen wesentlich breiteren Bereich von optischen Konstanten erreicht werden.

**Ansprüche**

1. Aufzeichnungsmedium für die reversible optische Aufzeichnung und deren Wiedergabe, im wesentlichen bestehend aus einem Substrat, mindestens einer Speicherschicht, welche durch Bestrahlung mit Licht zwischen zwei Zuständen unterschiedlicher optischer Konstanten reversibel schaltet, und mindestens einer transparenten Schicht, dadurch gekennzeichnet, daß bei der Bestrahlung der Speicherschicht unter einem von 0 Grad verschiedenen Einfallswinkel bei einer Schichtdicke d der transparenten Schicht für die Wellenlänge des eingestrahlten Lichts der Reflexionskontrast für senkrecht zur Einfallsebene polarisiertes Licht größer als 0,5 ist und die Summe der Reflexionsvermögen für parallel und senkrecht polarisiertes Licht mindestens 8 % beträgt.

2. Aufzeichnungsmedium gemäß Anspruch 1, dadurch gekennzeichnet, daß die Schichtdicke d der transparenten Schicht zwischen 50 und 200 nm gewählt wird, so daß bei einem Einfallswinkel des eingestrahlten Lichtes einer Wellenlänge zwischen 400 und 900 nm von 40 bis 80 Grad der Reflexionskontrast für senkrecht zur Einfallsebene polarisiertes Licht größer als 0,5 ist und die Summe der Reflexionsvermögen für parallel und senkrecht polarisiertes Licht mindestens 8 % beträgt.

3. Wiedergabemethode für optische Aufzeichnungsmedien nach Anspruch 1, bei welcher Informationen mit Hilfe eines Lichtstrahles, welcher auf die Speicherschicht des Aufzeichnungsmediums fokusiert wird, nachgewiesen werden, dadurch gekennzeichnet, daß die Speicherschicht mit einem Lichtstrahl einer Wellenlänge von 400-900 nm unter einem Winkel von 40 bis 80° zur Normalen auf die Speicherschicht beleuchtet wird und die reflektierte, senkrecht polarisierte Komponente des Lichtstrahls identifiziert wird.

# FIG.1

# FIG.2

lambda_B (a)

$90° - Psi (10°)$

lambda ($10^2$ nm)

lambda_B (c)

$90° - Psi (10°)$

lambda ($10^2$ nm)

# FIG.3